# EUROPEAN PATENT APPLICATION

(11) **EP 4 681 835 A1**
(43) Date of publication of application: **21.01.2026**
(21) Application number: 23927564.7
(22) Date of filing: 05.10.2023
(51) Int. Cl.: B21C 37/08, B21C 37/083, B23K 13/00, C23C 4/02

(54) **METHOD FOR MANUFACTURING ELECTRIC RESISTANCE WELDED STEEL PIPE, AND ELECTRIC RESISTANCE WELDED STEEL PIPE**

(30) Priority: 16.03.2023 JP 2023041937
(71) Applicant: NIPPON STEEL CORPORATION, Chiyoda-ku Tokyo 100-8071 (JP)
(72) Inventor: YAMASHITA Satoru, Tokyo 100-8071 (JP); KOBAYASHI Akinobu, Tokyo 100-8071 (JP)
(74) Representative: Zimmermann & Partner Patentanwälte mbB
(86) International application number: PCT/JP2023/036365
(87) International publication number: WO 2024/189948

(57) **Abstract**

Provided is a production method of an electric resistance welded steel pipe, including: an end face-shaping step of forming, on each of a first end face and a second end face on both sides in a width direction of a plated steel sheet, an outer inclined portion inclined in a sheet-thickness direction from a side of an outer surface toward a side of an inner surface or forming the outer inclined portion and an inner inclined portion inclined in the sheet-thickness direction from the side of the inner surface toward the side of the outer surface, the first end face and the second end face each being shaped in such a way that a sheet thickness decreases from a center in the width direction toward the end face; and a pipe-making step of welding the first end face and the second end face both undergone shaping end to end to make a pipe. Accordingly, in an electric resistance welded steel pipe, the original of which is a plated steel sheet, the degradation of corrosion resistance in the weld zone and its vicinity is inhibited.

## Description

### TECHNICAL FIELD

The present invention relates to a production method of an electric resistance welded steel pipe and an electric resistance welded steel pipe.

### BACKGROUND ART

A plated steel sheet exhibits a high corrosion resistance by an anti-corrosion effect of plating in a surface covered with a plated layer. However, when a plated steel sheet undergoes welding, places in and around a weld zone are locally subjected to a high temperature, leading to the evaporation of plating components and therefore the degradation of corrosion resistance. Furthermore, when removing a bead generated by welding as in an electric resistance welded steel pipe, a part of plating layers in the vicinity of the bead is also removed along with the bead, which leaves the weld zone and its vicinity in a state in which the steel substrate is exposed, so that regions suffering from a degraded corrosion resistance may expand.

Accordingly, in the production of an electric resistance welded steel pipe, the original of which is a plated steel sheet, it is a common practice to carry out post-repair such as spraying main plating components (for example, Zn) on the weld zone and its vicinity to compensate for the degradation of corrosion resistance in the weld zone and its vicinity. However, the corrosion resistance in repaired portions of the weld zone and its vicinity may not necessarily be recovered to the same extent as other portions. Due to the degradation of corrosion resistance in the weld zone and its vicinity, post-plated products that have been hot dipped after processing are used in those fields in which a high corrosion resistance is required, instead of pre-plated products produced by processing plated steel sheets. In such a situation, to increase productivity, there is a need to improve a corrosion resistance in the weld zone and its vicinity of an electric resistance welded steel pipe, the original of which is a plated steel sheet.

As prior arts related to the production of an electric resistance welded steel pipe, for example, Patent Document 1 discloses a technique of providing, at a strip-material end portion, a tapered shape that has inclined surfaces, each of which is continuous with both end faces on outer- and inner-diameter sides in a strip-material thickness direction, from a strip-material vertical end face, and thereafter, performing electric resistance welding in such a way that a butt angle between the strip-material vertical end faces is within the range of ±1 degree. Furthermore, Patent Document 2 discloses a technique of providing tapers on both outer- and inner-surface sides of both edges of an open pipe formed by shaping a steel strip substantially in a tubular shape, the tapers each having an angle of 15 to 50° between an inclined surface and a steel-strip vertical end face and a length in the thickness direction of 10 to 45% of a steel-strip thickness from a steel-strip surface of the inclined surface, and thereafter, performing electric resistance welding with an upset amount that is 40 to 75% of the steel-strip thickness.

Furthermore, as a technique of producing a welded pipe by butt welding of both end portions in the width direction of a plated steel strip, for example, Patent Document 3 discloses that plated layers at both end portions in the width direction, each of which serves as a weld zone, are polished away, followed by butt welding. It is possible to obtain a weld zone with properties that are substantially the same as those of the substrate by removing a plated layer that adversely affects welding conditions, microstructure of the weld zone, and the like.

### LIST OF PRIOR ART DOCUMENTS

### PATENT DOCUMENT

Patent Document 1: JP2009-45643A
Patent Document 2: JP2013-139051A
Patent Document 3: JP4-197516A
Patent Document 4: WO 2020/183883

### SUMMARY OF INVENTION

### TECHNICAL PROBLEM

The techniques described in the above Patent Documents 1 and 2 are directed to electric resistance welded steel pipes used as oil country tubular goods or line pipes, which more strictly require a high corrosion resistance, and producing an electric resistance welded steel pipe, the original of which is a plated steel sheet, is not presumed. In addition, in the technique described in the above Patent Document 3, there is a concern that the corrosion resistance in the weld zone and its vicinity may degrade because plated layers on both end portions in the width direction, each of which serves as a weld zone, are removed.

Accordingly, an objective of the present invention, which has been made in view of the above-described problems, is to provide a production method of an electric resistance welded steel pipe capable of inhibiting the degradation of corrosion resistance in the weld zone and its vicinity in an electric resistance welded steel pipe, the original of which is a plated steel sheet, and an electric resistance welded steel pipe.

### SOLUTION TO PROBLEM

To solve the problems, according to an aspect of the present invention, there is provided a production method of an electric resistance welded steel pipe, including: an end face-shaping step of forming, on each of a first end face and a second end face on both sides in a width direction of a plated steel sheet, an outer inclined portion inclined in a sheet-thickness direction from a side of an outer surface toward a side of an inner surface or forming the outer inclined portion and an inner inclined portion inclined in the sheet-thickness direction from the side of the inner surface toward the side of the outer surface, the first end face and the second end face each being shaped in such a way that a sheet thickness decreases from a center in the width direction toward the end face; and a pipe-making step of welding the first end face and the second end face both undergone shaping end to end to make a pipe.

In the end face-shaping step, at least a part of the outer inclined portion may be covered with a plated layer that is continuous from the side of the outer surface.

In the pipe-making step, the first end face and the second end face may be heated to melt and the first end face and the second end face may be subjected to pressing joint such that a ratio of a width of a weld bead on the side of the outer surface to the sheet thickness of the plated steel sheet is 92% or less.

Furthermore, in the pipe-making step, a plating material may be applied to a weld zone resulting from pressing joint of the first end face and the second end face.

In the end face-shaping step, the plated steel sheet may be coiled after the first end face and the second end face are shaped, and in the pipe-making step, the plated steel sheet coiled in the end face-shaping step may be uncoiled to make a pipe.

Furthermore, to solve the problems, according to another aspect of the present invention, there is provided an electric resistance welded steel pipe, an original of which is a plated steel sheet, including: a weld zone extending in an axial direction, and heat-affected zones extending in the axial direction on both sides in a circumferential direction of the weld zone, wherein a ratio of an outer-surface circumferential length of the weld zone to a sheet thickness of the plated steel sheet is 48% or more, and for each of the heat-affected zones, a ratio of an outer-surface circumferential length of the heat-affected zone to the sheet thickness of the plated steel sheet is 40% or less.

Furthermore, to solve the problems, according to another aspect of the present invention, there is provided an electric resistance welded steel pipe, an original of which is a plated steel sheet, including, on an outer surface, a post-plated portion in which a plating material is applied along a weld zone extending at least in an axial direction, wherein a ratio of an outer-surface circumferential length of the post-plated portion to the sheet thickness of the plated steel sheet is 172% or less.

### ADVANTAGEOUS EFFECTS OF INVENTION

As described above, according to the present invention, it is possible to inhibit the degradation of corrosion resistance in the weld zone and its vicinity in the electric resistance welded steel pipe, the original of which is a plated steel sheet.

### BRIEF DESCRIPTION OF DRAWINGS

[Figure 1] Figure 1 is an explanatory diagram illustrating an example of a welding process for welding both ends in the width direction of a steel sheet shaped in a cylindrical shape in the production of an electric resistance welded steel pipe.
[Figure 2] Figure 2 is a diagram schematically illustrating shapes of before and after welding as viewed in the axial direction with regard to the weld zone and its vicinity of an electric resistance welded steel pipe, the original of which is a plated steel sheet.
[Figure 3] Figure 3 is an explanatory diagram illustrating an example of a way of providing each of the first end face and the second end face of the plated steel sheet with a shape that has the outer inclined portion and the inner inclined portion in the end face-shaping step.
[Figure 4] Figure 4 is a schematic diagram of a section of a cut end face of the plated steel sheet that is cut in a way in Figure 3 in a side view.
[Figure 5] Figure 5 is an explanatory diagram illustrating an example of a way of providing each of the first end face and the second end face of the plated steel sheet with a shape that has an outer inclined portion in the end face-shaping step.
[Figure 6] Figure 6 is a schematic diagram of a section of a cut end face of the plated steel sheet that is cut in a way in Figure 5 in a side view.
[Figure 7] Figure 7 is an explanatory diagram schematically illustrating shapes of before and after welding as viewed in the axial direction with regard to the weld zone and its vicinity of the plated steel sheet in the pipe-making step.
[Figure 8] Figure 8 is an explanatory diagram indicating definitions of the weld zone width, the heat-affected zone width, and the bead width.
[Figure 9] Figure 9 is a schematic explanatory diagram illustrating an electric resistance welded steel pipe according to an embodiment.
[Figure 10] Figure 10 shows simulation results each indicating an example relationship between the pressing amount during welding and the bead width for a steel pipe that has 114.3 mm in the outer diameter.
[Figure 11] Figure 11 shows simulation results each indicating an example relationship between the pressing amount during welding and the bead width for a steel pipe that has 139.8 mm in the outer diameter.
[Figure 12] Figure 12 shows simulation results each indicating an example relationship between the pressing amount during welding and the bead width for a steel pipe that has 159.8 mm in the outer diameter.
[Figure 13] Figure 13 shows simulation results each indicating a state when the removal of the outer bead is unnecessary.

### DESCRIPTION OF EMBODIMENTS

Preferable embodiments of the present invention will now be described below in detail with reference to attached drawings. In the specification and drawings, those components that have substantially the same functional configuration will be given like reference signs, and the description will not be repeated.

### [1. Studies on Corrosion Resistance in Weld Zone and Its Vicinity]

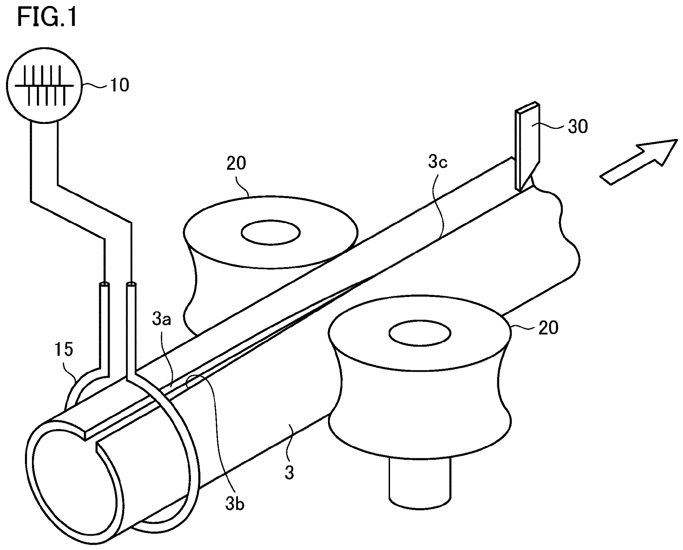

Figure 1 is an explanatory diagram illustrating an example of a welding process for welding both ends in the width direction of a steel sheet 3 shaped in a cylindrical shape, which is a common practice in the production of electric resistance welded steel pipe. For example, as illustrated in Figure 1, the electric resistance welded steel pipe is produced by passing a steel sheet shaped in a cylindrical shape through a coil 15, through which a high-frequency current 10 flows, and heating both ends 3a and 3b in the width direction by induction heating and then applying a pressure by squeeze rolls 20 to weld both molten ends 3a and 3b in the width direction. A bead is also generated with molten steel pushed out due to the pressure applied by the squeeze rolls 20 on the outer surface and the inner surface of a weld zone 3c where both ends 3a and 3b in the width direction are joined. The bead generated on the outer surface is removed by, for example, cutting tool 30.

In the electric resistance welded steel pipe, the original of which is a plated steel sheet, the degradation of corrosion resistance occurs in the weld zone and its vicinity. The inventors have earnestly studied on the causes and, as a result, revealed that in the electric resistance welded steel pipe, the original of which is a plated steel sheet, the degradation of corrosion resistance occurs in the weld zone and its vicinity due to the causes described below.

First, in the electric resistance welded steel pipe, the vicinity of the both end faces of the plated steel sheet is locally subjected to a high temperature due to heating during welding, so that plating materials in the region evaporate. As a result, the resultant end products are placed in a state in which the remaining amount of plating materials in the weld zone and its vicinity is lower than that in other portions, or in a state in which no plating material remains in the weld zone and its vicinity, leading to the degradation of corrosion resistance only in the weld zone and its vicinity.

Furthermore, the bead on the outer surface of the steel pipe is removed by being cut by the cutting tool, by being crushed by the rolls, and the like. At this time, a part of plating layers in the vicinity of the bead is also removed along with the bead, which leaves the weld zone and its vicinity in a state in which the steel substrate is exposed, so that regions suffering from a degraded corrosion resistance may be enlarged. It is also possible after removing the bead to carry out post-repair such as spraying main plating components on the weld zone and its vicinity to compensate for the degradation of corrosion resistance in the weld zone and its vicinity. However, the corrosion resistance in repaired portions of the weld zone and its vicinity may not necessarily be recovered to the same extent as other portions.

In consideration of these causes, the inventors have come to think that narrowing the removed width of bead makes it possible to reduce regions left in a state in which the steel substrate is exposed in the weld zone and its vicinity, so that the degradation of corrosion resistance in the weld zone and its vicinity can be inhibited. The inventors have then conceived that the bead can be narrowed by optimizing the shapes of the end faces on both sides in the width direction of the plated steel sheet, and as a result, the removed width of bead can be narrowed. Specifically, in each of the first end face and the second end face on both sides in the width direction of the plated steel sheet, the bead generated by welding the first end face and the second end face is made narrowed by providing a beveled shape at a corner between the surface and the end face only on the side of the outer surface or on the sides of both the outer surface and the inner surface.

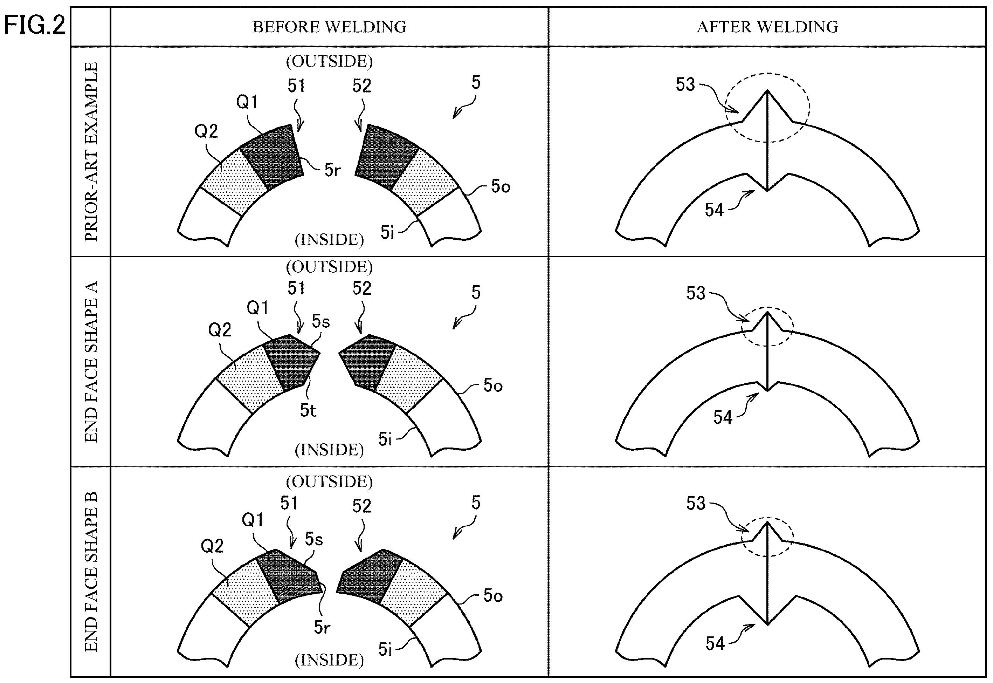

Figure 2 is a diagram schematically illustrating shapes of before and after welding as viewed in the axial direction with regard to the weld zone and its vicinity of an electric resistance welded steel pipe, the original of which is a plated steel sheet. The shapes before welding each indicate a state in which a plated steel sheet 5 shaped in a cylindrical shape is subjected to heating on a first end face 51 and second end face 52 on both sides in the width direction. The heated portions of the plated steel sheet 5 are a weld zone Q1 and a heat-affected zone Q2 from the sides nearer to the first end face 51 and the second end face 52. Here, it is assumed that the width in the circumferential direction of each of the weld zone Q1 and the heat-affected zone Q2 is similar in extent to that of the sheet thickness. Furthermore, the shapes after welding each indicate a state in which the first end face 51 and the second end face 52 of the plated steel sheet 5 are welded end to end, and an outer bead 53 is generated on the side of an outer surface 5o and an inner bead 54 on the side of an inner surface 5i. Note that, in Figure 2, the shape in the weld zone and its vicinity is depicted with exaggeration for ease of understanding.

In the prior-art example in Figure 2, the first end face 51 and the second end face 52 of the plated steel sheet 5 substantially maintain the shape of the sheet before being shaped in a cylindrical shape and are substantially perpendicular to the outer surface 5o and the inner surface 5i. Once the first end face 51 and the second end face 52 of the plated steel sheet 5 are welded end to end, the substrate in the weld zone Q1 is pushed out to the sides of both the outer surface 5o and the inner surface 5i, so that the outer bead 53 and the inner bead 54 are generated.

An end face shape A and an end face shape B in Figure 2 are examples of shapes of the first end face 51 and the second end face 52 according to an embodiment of the present invention.

The end face shape A is a beveled shape at a corner, one on each of the sides of the outer surface 5o and the inner surface 5i. As illustrated in Figure 2, the end face shape A is composed of an outer inclined portion 5s inclined in a sheet-thickness direction from the side of the outer surface 5o toward the side of the inner surface 5i, and an inner inclined portion 5t inclined in a sheet-thickness direction from the side of the inner surface 5i toward the side of the outer surface 5o, and shaped in such a way that the sheet thickness decreases toward the end face. When the first end face 51 and the second end face 52 are each provided with the end face shape A, the amount of the substrate in the weld zone Q1 is smaller by the volume of the corners on the sides of the outer surface 5o and the inner surface 5i compared with the prior-art example. Accordingly, when the first end face 51 and the second end face 52, each provided with the end face shape A, are welded end to end, both the outer bead 53 and the inner bead 54 are smaller than those in the comparative example.

The end face shape B is a beveled shape at a corner on the side of the outer surface 5o. As illustrated in Figure 2, the end face shape B includes an outer inclined portion 5s inclined in a sheet-thickness direction from the side of the outer surface 5o toward the side of the inner surface 5i, and shaped in such a way that the sheet thickness decreases toward the end face. In the example of the end face shape B illustrated in Figure 2, a surface 5r that is substantially perpendicular to the inner surface 5i is present on the side of the inner surface 5i, whereas the end face shape B may be composed only of the outer inclined portion 5s. When the first end face 51 and the second end face 52 are each provided with the end face shape B, the amount of the substrate in the weld zone Q1 is smaller by the volume of the corners on the side of the outer surface 5o compared with the prior-art example. Accordingly, when the first end face 51 and the second end face 52, each provided with the end face shape B, are welded end to end, the outer bead 53 is smaller than that of the comparative example.

It is possible by providing the shapes of the first end face 51 and the second end face 52 with the end face shape A or the end face shape B to narrow the bead generated after welding, and as a result, to narrow the removed width of bead. In this way, a repair width resulting from thermal spraying of main plating components for compensating for the degradation of corrosion resistance is narrowed, so that the corrosion resistance in the weld zone and its vicinity will be improved.

While it is presumed for the end face shape B that the inner bead 54 may be as large as that of the prior-art example, the inner bead 54, which is not visible from the outside, may not be removed. For example, in a member used in a state in which the inner surface is not exposed to the outside, such as a pipe for a support post of a guardrail and a guard pipe, the inner bead, if any, will not be problematic. Accordingly, the present invention aims to narrow the outer bead 53 regardless of whether the inner bead 54 is present or not.

### [2. Production Method of Electric Resistance Welded Steel Pipe, the Original of Which is Plated Steel Sheet]

A production method of an electric resistance welded steel pipe, the original of which is a plated steel sheet, according to an embodiment of the present invention will be described. The production method of an electric resistance welded steel pipe according to the embodiment includes an end face-shaping step of shaping end faces on both sides in the width direction (the first end face and the second end face) of the plated steel sheet, which is an original sheet, and a pipe-making step of welding the first end face and the second end face both undergone shaping end to end to make a pipe. In the description below, the plated steel sheet, which is the original sheet, is assumed to be a plated steel sheet that contains Zn as a main component.

### (End Face-Shaping Step)

In the end face-shaping step, each of the first end face and the second end face of the plated steel sheet, which is the original sheet, is shaped to have a beveled shape at a corner between the surface and the end face only on the side of the outer surface or on the sides of both the outer surface and the inner surface. Specifically, the first end face and the second end face are shaped into, for example, shapes that have the outer inclined portion 5s, or the outer inclined portion 5s and the inner inclined portion 5t as in the end face shape A or the end face shape B illustrated in Figure 2. At this time, they are shaped in such a way that the sheet thickness decreases toward the end face (the first end face or the second end face) from the center in the width direction of the plated steel sheet. The outer inclined portion 5s and the inner inclined portion 5t may be planar as illustrated in Figure 2 or may be curved.

While there is no particular limitation on how the end face is shaped, it is desirable that a plated layer on the surface of the plated steel sheet, which is an original sheet, covers the end face after shaping as much as possible. By covering the end face with a plated layer, it is possible to narrow a repair width to be subjected to spraying of main plating components after the first end face and the second end face are welded as much as possible.

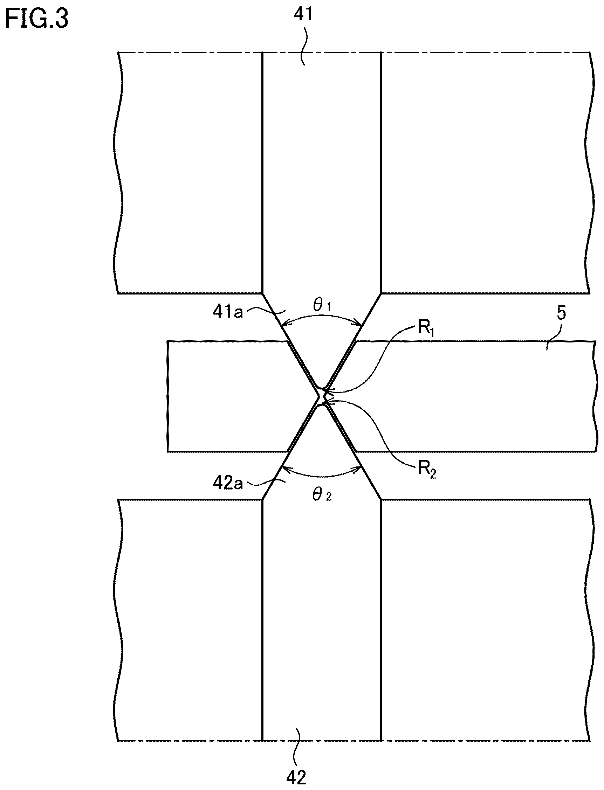

For example, to provide each of the first end face and the second end face of the plated steel sheet with a shape that has the outer inclined portion and the inner inclined portion as in the end face shape A illustrated in Figure 2, a cutting device that includes a pair of ring-shaped blade portions 41 and 42 with V-shaped cutting edges 41a and 42a as illustrated in Figure 3 may be used (for example, Patent Document 4). Tip angles θ₁ and θ₂ of the cutting edges 41a and 42a of the cutting device are set to 10° to 120° and tip radii R₁ and R₂ of the cutting edges 41a and 42a to 0.5% to 35.0% of the sheet thickness, and then, the plated steel sheet 5 is allowed to pass between rotating ring-shaped blade portions 41 and 42 to cut the end portions. In this way, a tensile force generated between the cutting edges 41a and 42a of the pair of ring-shaped blade portions 41 and 42 and the plated steel sheet 5 causes a plated layer on the surface of the plated steel sheet 5 to come in along a cut end face, so that the cut end face is covered with a plated layer.

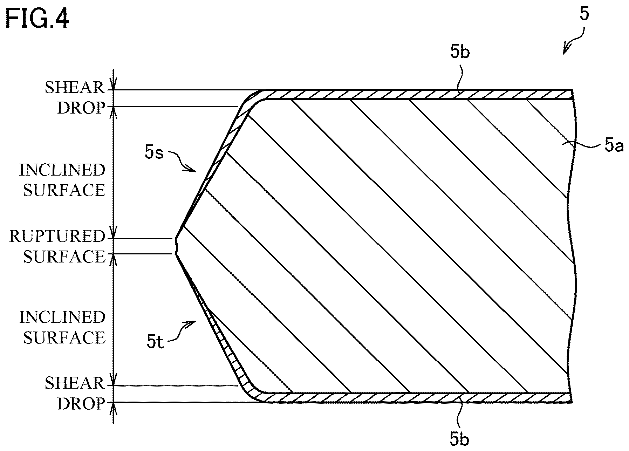

Figure 4 illustrates an example of a cut end face of the plated steel sheet 5 cut by the cutting device that includes a pair of ring-shaped blade portions 41 and 42 illustrated in Figure 3. Figure 4 is a schematic diagram of a section of a cut end face of the plated steel sheet 5 in a side view with both surfaces of the substrate 5a being covered with a plated layer 5b. As illustrated in Figure 4, the cut end face of the plated steel sheet 5 is composed of shear drops, inclined surfaces, and a ruptured surface. The shear drop and the inclined surface on an upper side of Figure 4 are formed by the cutting edge 41a of the ring-shaped blade portion 41 in Figure 3, and the shear drop and the inclined surface on a lower side of Figure 4 are formed by the cutting edge 42a of the ring-shaped blade portion 42 in Figure 3. The inclined surfaces are covered with plated layers 5b that are continuous from the surfaces of the plated steel sheet 5. The ruptured surface is a result of a rupture at a crack, which serves as a starting point, generated in the plated steel sheet 5 by the cutting edges 41a and 42a.

For example, the inclined surface on the upper side of Figure 4 becomes the outer inclined portion 5s after shaping the end face, and the inclined surface on the lower side of Figure 4 becomes the inner inclined portion 5t after shaping the end face. In this way, by using the cutting device that includes a pair of ring-shaped blade portions 41 and 42 with V-shaped cutting edges 41a and 42a illustrated in Figure 3 to cut both sides in the width direction of the plated steel sheet 5, it is possible to form the outer inclined portion 5s and the inner inclined portion 5t each covered with a plated layer 5b on each of a first end face and a second end face.

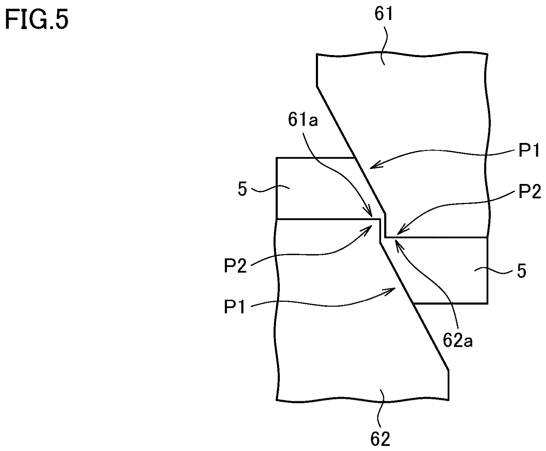

Furthermore, to provide each of the first end face and the second end face of the plated steel sheet with a shape that has the outer inclined portion as in the end face shape B illustrated in Figure 2, a cutting device that includes a pair of slit blades 61 and 62 with an inclined portion P1 and a protruding portion P2 in each of the shapes of the blade portions 61a and 62a as illustrated in Figure 5 for example may be used. The inclined portions P1 of the blade portions 61a and 62a are inclined with respect to a pushing direction on the plated steel sheet 5, and the protruding portions P2 protrude from the inclined portions P1 in the pushing direction. The plated steel sheet 5 is allowed to pass between the rotating slit blades 61 and 62 to cut the end portions. This allows the inclined portions P1 of the blade portions 61a and 62a to compress plating materials of the plated layer 5b including the substrate 5a in the pushing direction (sheet thickness direction), which are forced over the cut end faces, and to apply compressive stress so as to delay cutting timing, so that the inclined surface can be covered with a plated layer. In addition, the protruding portions P2 of the blade portions 61a and 62a completely cut the plated steel sheet 5, so that it is possible to inhibit a large burr from being generated.

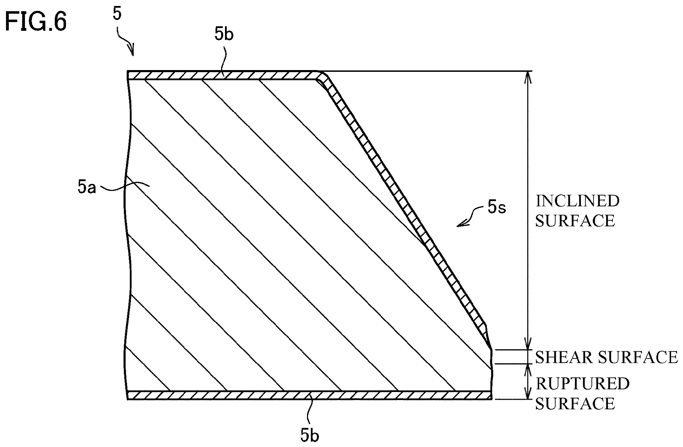

Figure 6 illustrates an example of a cut end face of the plated steel sheet 5 cut by the cutting device that includes a pair of slit blades 61 and 62 illustrated in Figure 5. Figure 6 is a schematic diagram of a section of a cut end face of the plated steel sheet 5 in a side view with both surfaces of the substrate 5a being covered with a plated layer 5b. Note that Figure 6 illustrates a cut end face corresponding to the side on which the surface (top surface) that faces the inclined portion P1 has been pushed in by the inclined portion P1 of the slit blade 61 in Figure 5. As illustrated in Figure 6, the cut end face of the plated steel sheet 5 has an inclined surface, a shear surface, and a ruptured surface in this order from the top surface. The inclined surface is a surface formed along the inclined portion P1 of the blade portion 61a of the slit blade 61 and is inclined with respect to the sheet thickness direction. The shear surface is a smooth surface formed in a small amount due to the movement of the slit blade 61 chopping the plated steel sheet 5. The ruptured surface is a surface at which the plated steel sheet 5 has ruptured starting with a crack generated in the plated steel sheet 5.

For example, the inclined surface in Figure 6 becomes the outer inclined portion 5s after shaping the end face. In this way, by using the cutting device that includes a pair of slit blades 61 and 62 illustrated in Figure 5 to cut both sides in the width direction of the plated steel sheet 5, it is possible to form the outer inclined portion 5s covered with a plated layer 5b on each of a first end face and a second end face.

As described above, in the end face-shaping step, each of the first end face 51 and the second end face 52 of the plated steel sheet 5 is provided with a shape that has the outer inclined portion 5s and the inner inclined portion 5t as illustrated in Figure 4 or a shape that has the outer inclined portion 5s as illustrated in Figure 6.

While the outer inclined portion 5s and the inner inclined portion 5t are not necessarily covered with a plated layer, at least a part of the outer inclined portion 5s is preferably covered with the plated layer 5b that is continuous from the side of the outer surface. As described later, in the pipe-making step, when the first end face 51 and the second end face 52 are heated before welding, low-melting-point components such as Zn among components of the plated layer 5b of the weld zone, in which the substrate 5a is in a semi-molten state, will evaporate, whereas the plated layer 5b is left in the heat-affected zone in a molten state, which will be solidified and cover the substrate 5a after being cooled. In the end face-shaping step, covering at least a part of the outer inclined portion 5s of each of the first end face 51 and the second end face 52 by the plated layer 5b that is continuous from the side of the outer surface makes it possible to reduce regions suffering from degraded corrosion resistance due to the exposure of the substrate 5a to the outside.

### (Pipe-Making Step)

Next, in the end face-shaping step, the first end face 51 and the second end face 52 both undergone shaping are welded end to end to make a pipe. The pipe-making step may be carried out by using, for example, the equipment illustrated in Figure 1. First, the first end face 51 and the second end face 52 are heated to melt. Then, the first end face 51 and the second end face 52 are subjected to pressing joint. At this time, the ratio of the width of the weld bead (outer bead 53) on the side of the outer surface 5o (hereinafter, also referred to as "bead width") to the sheet thickness of the plated steel sheet 5 is adjusted to 92% or less. The bead width refers to a portion that needs to be cut after welding and is the width in the circumferential direction of a portion extruded to the outside from the outer surface 5o of the steel pipe.

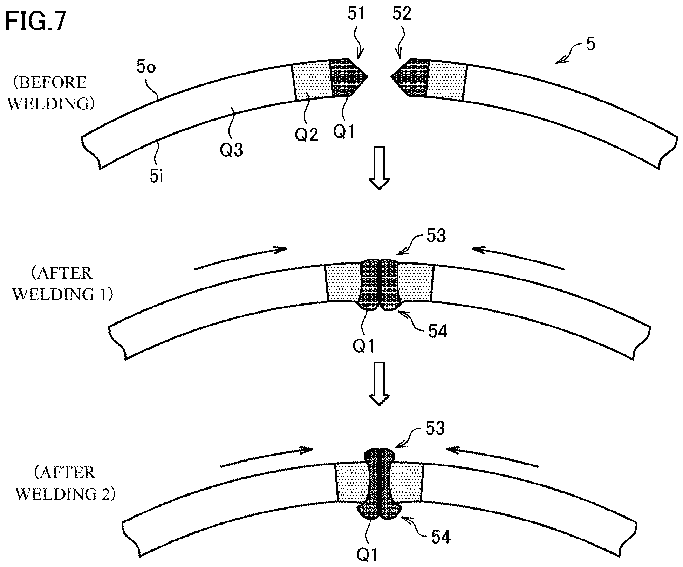

Figure 7 schematically illustrates shapes of before and after welding as viewed in the axial direction with regard to the weld zone and its vicinity of the plated steel sheet 5 in the pipe-making step. As an example, Figure 7 illustrates when the first end face 51 and the second end face 52 are provided with the end face shape A illustrated in Figure 2.

In a state in which the first end face 51 and the second end face 52 of the plated steel sheet 5 shaped in a cylindrical shape are heated, the heated portions of the plated steel sheet 5 are a weld zone Q1 and a heat-affected zone Q2 from the sides nearer to the first end face 51 and the second end face 52. The weld zone Q1 is a semi-molten portion in which steel, which is the substrate, is softened. In the weld zone Q1, since the substrate is heated to a high temperature of 900°C or more, low-melting-point components such as Zn among plating components covering the surface of the plated steel sheet 5 evaporate. The heat-affected zone Q2 is a portion in which steel constituting the substrate is heated to a high temperature and the plated layer covering the surface of the plated steel sheet 5 is melted. That is, in the heat-affected zone Q2, the substrate is heated to 400°C to 900°C, so that in a part or the entirety of the region, a part or all of plating components are melted. Note that in a portion that is farther away from the end portion (first end face 51 or second end face 52) than the heat-affected zone Q2, the plated steel sheet 5, which is the original sheet, is maintained, and the outer surface 5o and the inner surface 5i are covered with a plated layer.

In the pipe-making step, the weld zone Q1 of the first end face 51 and the weld zone Q1 of the second end face 52 are pressed against each other to join the first end face 51 and the second end face 52. When the weld zones Q1 are continued to be pressed, the first end face 51 and the second end face 52 that are triangular and consist of the outer inclined portion 5s and the inner inclined portion 5t in a side view are deformed and disappeared, and the plated steel sheet 5 becomes tubular (AFTER WELDING 1). At this time, molten substrate is extruded from the outer surface 5o and the inner surface 5i to form the outer bead 53 and the inner bead 54. Further continued to be pressed, the substrate is further extruded from the outer surface 5o and the inner surface 5i, so that the width in the circumferential direction of the joined weld zones Q1 decreases, whereas the outer bead 53 and the inner bead 54 grow (AFTER WELDING 2).

Among the weld beads generated by welding, the outer bead 53 that is visible from the outside is at least removed. In a production method of an electric resistance welded steel pipe according to the embodiment, the bead generated after welding is narrowed and therefore the removed width of bead is narrowed, so that a repair width to be subjected to spraying of main plating components is narrowed to improve corrosion resistance in the weld zone and its vicinity. To this end, the ratio of the bead width of the outer bead 53 to the sheet thickness of the plated steel sheet 5 is 92% or less.

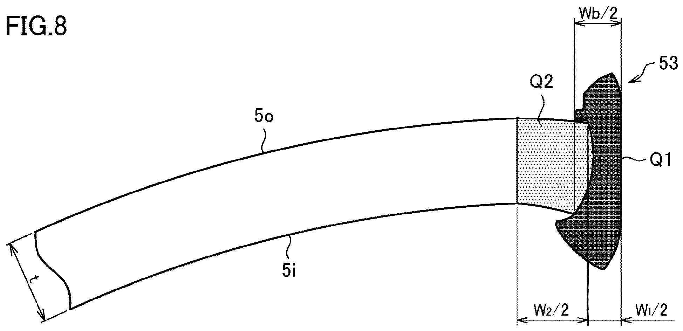

Here, a width (weld zone width) W1 of the weld zone Q1, a width (heat-affected zone width) W2 of the heat-affected zone Q2, and a bead width Wb of the outer bead 53 are defined as illustrated in Figure 8. The weld zone width W1 is the length in the circumferential direction of the weld zone Q1 on the outer surface 5o. The heat-affected zone width W2 is the length in the circumferential direction of the heat-affected zone Q2 on the outer surface 5o. The bead width Wb of the outer bead 53 is the length in the circumferential direction of the outer bead 53 on the outer surface 5o. Note that Figure 8 illustrates the weld zone and its vicinity on one end face side. That is, the weld zone width W1, the heat-affected zone width W2, and the bead width Wb of the entire steel pipe would be twice the widths shown in Figure 8.

Regions that are turned into the weld zone Q1 and the heat-affected zone Q2 by being heated in the pipe-making step are substantially the same regardless of the shapes of the first end face 51 and the second end face 52 of the plated steel sheet 5. However, even if the weld zone Q1 is pushed in with the same pressing amount during welding, those that are shaped and beveled in end face shapes such as the end face shape A or the end face shape B in Figure 2 lead to an increased pressing amount compared with the prior-art example to the extent that the amount of the substrate in the end portion is smaller.

Here, as the pressing amount increases, the substrate in the weld zone Q1 extruded from the outer surface 5o of the steel pipe to the outside increases, leading to an increase in the bead width Wb of the outer bead 53. However, in the case in which the first end face 51 and the second end face 52 is beveled, the amount of the substrate in the weld zone Q1 extruded from the outer surface 5o of the steel pipe to the outside is smaller than that in the prior-art example to the extent that the amount of the substrate in the end portion is smaller than that of the prior-art example even as the pressing amount increases. Accordingly, by beveling the first end face 51 and the second end face 52, it is possible to reduce the bead width Wb of the outer bead 53 while the pressing amount increases. When the ratio of the bead width Wb to the sheet thickness t of the plated steel sheet 5 is made 92% or less by adjusting the pressing amount during welding, the outer bead 53 can be narrowed compared with the prior-art example in Figure 2.

Furthermore, because of joining of the first end face 51 and the second end face 52, a part of the weld zone Q1, from which low-melting-point components such as Zn among plating components on the surface have evaporated, is extruded to the outside of the steel pipe as a weld bead (the outer bead 53 or the inner bead 54). Increasing the pressing amount of the first end face 51 and the second end face 52 eventually leaves the weld zone Q1 on the product, so that an amount that causes the degradation of corrosion resistance can be reduced.

Furthermore, in the pipe-making step, a plating material may be applied to the weld zone Q1 after the first end face 51 and the second end face 52 are subjected to pressing joint. In the case in which the outer bead 53 is not generated during welding and there is no irregularity on the outer surface of the steel pipe, removal of the outer bead 53 is not necessary. However, in the weld zone Q1, low-melting-point components such as Zn among plating components have evaporated when the end faces (the first end face 51 and the second end face 52) are heated. Furthermore, when the outer bead 53 is generated during welding, the outer bead 53 is to be removed. Then, the substrate is exposed in the weld zone Q1 and a region from which the outer bead 53 has been removed, and any plated layer has disappeared. Accordingly, thermal spraying of main plating components and the like is carried out to apply a plating material to the weld zone Q1 and the region from which the outer bead 53 has been removed, so as to inhibit the degradation of corrosion resistance.

As described above, in the pipe-making step, the first end face 51 and the second end face 52 both undergone shaping in the end face-shaping step are welded end to end to make a pipe. This makes it possible to narrow the bead width of the outer bead 53 during welding while increase the pressing amount of the first end face 51 and the second end face 52. In this way, it is possible to inhibit the degradation of corrosion resistance in the weld zone on the outer surface of the steel pipe after welding.

In the pipe-making step, when the first end face 51 and the second end face 52 are heated before welding, low-melting-point components such as Zn among components of the plated layer 5b evaporate in the weld zone Q1 in which the substrate 5a is in a semi-molten state. Accordingly, the substrate and plating materials will not be mixed in the weld zone Q1, and therefore, any penetrator generated during the electric resistance welding will not remain, which is a concern in the Patent Documents 1 and 2. Furthermore, penetrators are often generated in special steels that contain a large amount of Mn and Si, and therefore, penetrators is less likely to be generated in the steel sheet used as the substrate of the plated steel sheet 5. Furthermore, when the plated steel sheet 5 is subjected to welding, the substrate is exposed to air for a shorter time during welding because the substrate is covered with a plated layer, so that penetrator generation due to oxidation of Mn and Si is inhibited. Accordingly, in the invention according to the embodiment, penetrators will not be problematic.

A production method of an electric resistance welded steel pipe according to the embodiment has been described. According to the embodiment, the end faces (the first end face and the second end face) on both sides in the width direction of the plated steel sheet, which is an original sheet, are beveled and shaped, and thereafter, the first end face and the second end face both undergone shaping are welded end to end to make a pipe. In this way, the bead generated after welding is narrowed and therefore the removed width of the bead is narrowed. As a result, a repair width to be subjected to spraying of main plating components is narrowed, so that the degradation of corrosion resistance can be inhibited in the weld zone and its vicinity.

The end face-shaping step and the pipe-making step may be carried out in the same production line as a series of processes or may be carried out in different production lines. For example, in the end face-shaping step, the first end face 51 and the second end face 52 of the plated steel sheet 5, which is the original sheet, are shaped, and thereafter, the plated steel sheet 5 is coiled. Then, in the pipe-making step, the plated steel sheet 5 coiled in the end face-shaping step may be uncoiled to make a pipe.

### [3. Electric Resistance Welded Steel Pipe, the Original of Which is Plated Steel Sheet]

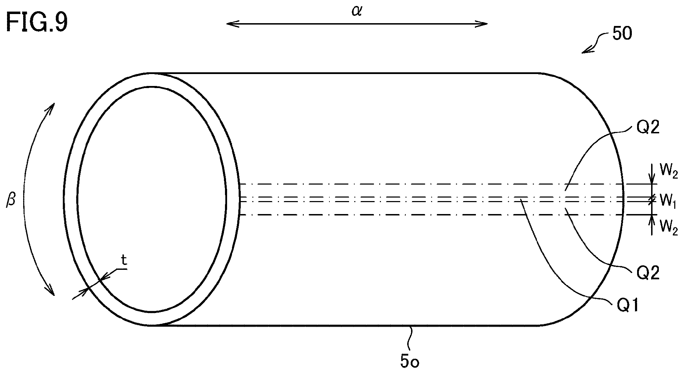

Figure 9 illustrates an example of an electric resistance welded steel pipe 50 produced by the production method described above. Figure 9 is a schematic diagram of the electric resistance welded steel pipe 50, the original of which is a plated steel sheet. As illustrated in Figure 9, the electric resistance welded steel pipe 50 includes a weld zone Q1 extending in the axial direction (α direction), and a heat-affected zone Q2 extending in the axial direction on both sides in the circumferential direction (β direction) of the weld zone Q1. In the electric resistance welded steel pipe 50, the ratio (W₁/t) of the circumferential length W₁ of the outer surface 5o of the weld zone Q1 to the sheet thickness t of the plated steel sheet is 48% or more. Furthermore, the ratio (W₂/t) of each circumferential length W₂ of the outer surface 5o of the heat-affected zone Q2 to the sheet thickness t of the plated steel sheet is 40% or less (80% or less for the entire steel pipe).

On the outer surface 5o of the electric resistance welded steel pipe 50 there may be a post-plated portion in which a plating material is applied along the weld zone Q1 extending at least in the (α direction). The post-plated portion is a portion to which a plating material is applied by thermal spraying of main plating components and the like after the outer bead 53 is removed. The post-plated portion includes at least the outer bead 53 after welding, and may further include a portion of the heat-affected zone Q2 adjacent to the weld zone Q1 including the outer bead 53 after welding. When the circumferential length of the post-plated portion outer surface 5o is defined as W₃, the length W₃ of the post-plated portion is equal to or more than the length W₁ of the weld zone Q1, and is as much as the removed bead width Wb. The ratio (W₃/t) of the length W₃ of the post-plated portion to the sheet thickness t of the plated steel sheet is 172% or less.

In the electric resistance welded steel pipe 50 as described above, the degradation of corrosion resistance is inhibited in the weld zone Q1 and its vicinity.

### EXAMPLE

The relationship between the pressing amount and the bead width was simulated for verification for the cases in which the end face shape of the steel sheet was that of the prior-art example, the end face shape A, and the end face shape B illustrated in Figure 2. In the verification, simulation was conducted on steel pipes that each had 4.5 mm in the sheet thickness but had three different outer diameters (114.3 mm, 139.8 mm, and 159.8 mm). In the end face shape A, an inclination angle of each of the outer inclined portion and the inner inclined portion with respect to the sheet thickness direction was 30°, and the shape was up-down symmetric. In the end face shape B, the inclination angle of the outer inclined portion with respect to the sheet thickness direction was 45°, and the ratio of the sheet thickness of the outer inclined portion to the sheet thickness of a portion substantially perpendicular to the inner surface was 7:3. It was assumed that the tensile strength of the steel sheet was 400 MPa.

In the simulation, a 900°C region, which was a simulated weld zone, a 300°C region, which was a simulated heat-affected zone, and a 0°C region, which was a simulated area unaffected by heat were set from the side nearer to the end face. It was assumed that each width in the circumferential direction of the 900°C region and the 300°C region was the same as the sheet thickness.

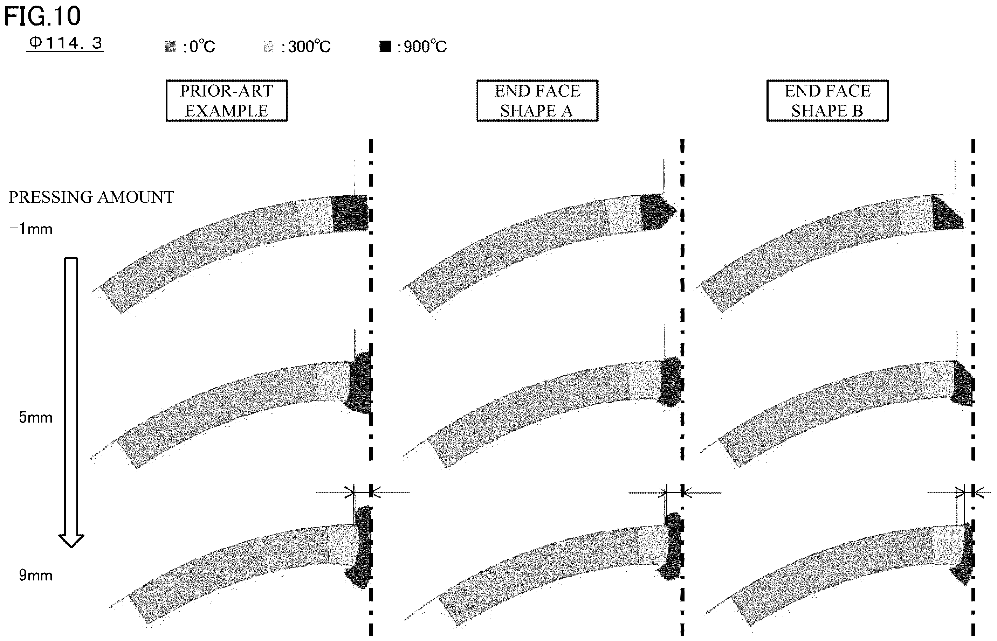

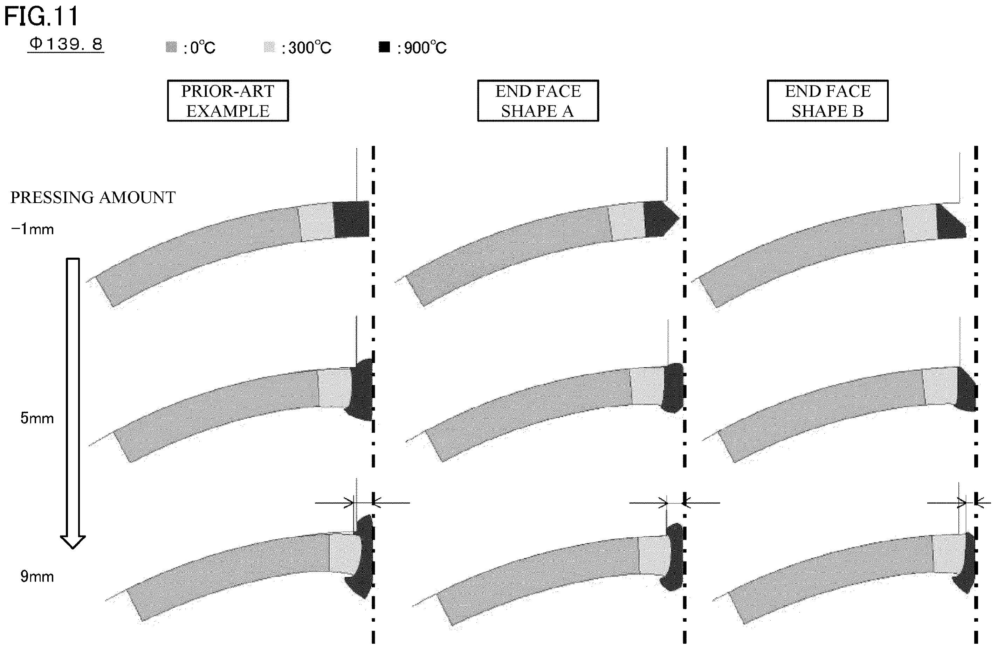

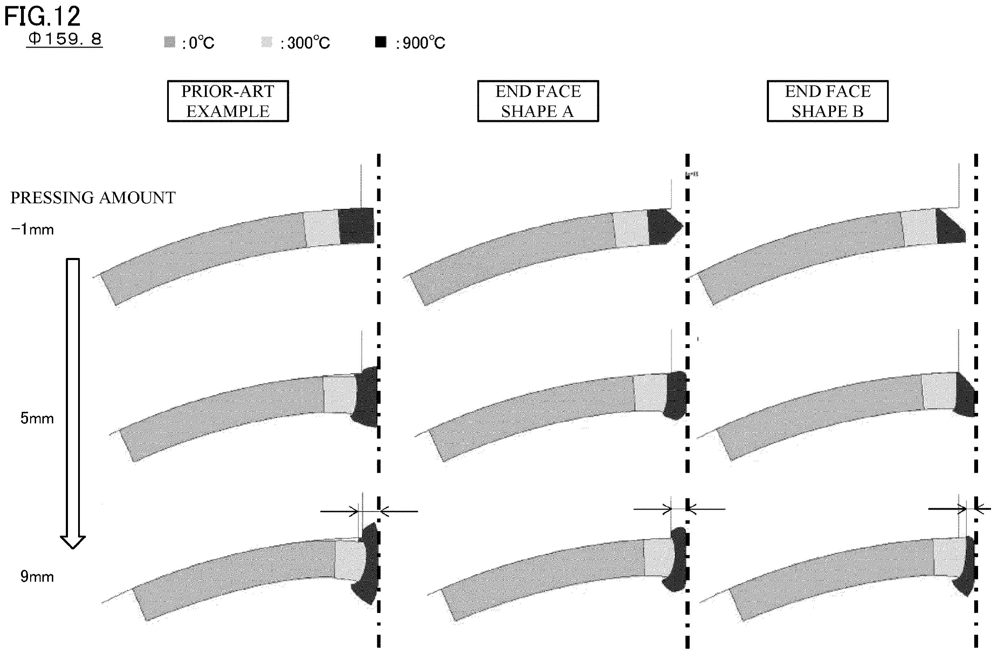

Figures 10 to 12 indicate the results of the simulation. Figures 10 to 12 indicate three states: pressing amount -1 mm (before welding); pressing amount 5 mm (after welding); and pressing amount 9 mm (after welding) for each end face shape. As illustrated in Figures 10 to 12, regardless of the diameter of steel pipe, the bead width of the outer bead after welding of each case of the end face shape A and the end face shape B were smaller than those of the prior-art examples. Furthermore, in the case of the end face shape B, the 900°C region on the side of the outer surface is reduced because the portion in which the end face is beveled increases compared with the end face shape A. As a result, it can be seen that when the pressing amounts are the same, in the case of end face shape B, the bead width of the outer bead can be smaller and the 900°C region remaining on the steel pipe can also be smaller as compared with the end face shape A.

Table 1 below indicates bead widths, weld zone widths, and heat-affected zone widths of outer beads when the pressing amount was 9 mm. Furthermore, Table 2 below indicates a range of the ratios of the bead widths, the weld zone widths, and the heat-affected zone widths of the outer beads, each to the sheet thickness, as calculated based on Table 1. Note that Table 1 and Table 2 both indicate values of one end face, and therefore the values are to be doubled for the entire steel pipe.

**[Table 1]**

| Outer diameter [mm] | Prior-art example | | | End face shape A | | | End face shape B | | |
|---|---|---|---|---|---|---|---|---|---|
| | 114.3 | 139.8 | 159.8 | 114.3 | 139.8 | 159.8 | 114.3 | 139.8 | 159.8 |
| Bead width [mm] (one side) | 2.3 | 2.4 | 2.5 | 2.1 | 1.9 | 2.5 | 1.6 | 1.3 | 1.3 |
| Weld zone width[mm] (one side) | 1.8 | 1.7 | 1.8 | 1.7 | 1.7 | 1.8 | 1.1 | 1.1 | 1.1 |
| Heat-affected zone width [mm] (one side) | 1.8 | | | | | | | | |

**[Table 2]**

| | Prior-art example | End face shape A | End face shape B |
|---|---|---|---|
| Ratio of bead width to sheet thickness (one side) | 50 to 56% | 42 to 46% | 29 to 36% |
| Ratio of weld zone width to sheet thickness (one side) | 38 to 40% | 38 to 40% | 24% |
| Ratio of heat-affected zone width to sheet thickness (one side) | 40% | 40% | 40% |

The larger the pressing amount, the larger the bead width becomes. Accordingly, the ratio of the bead width to the sheet thickness indicated in Table 2 refers to a range in which the maximum value may fall. According to Table 2, the maximum value of the ratios of the bead width to the sheet thickness of the prior-art example is 100 to 112% for the entire steel pipe. In contrast, in the case of the end face shape A and the end face shape B, the maximum value of the ratios of the bead width to the sheet thickness is a value of 58 to 92% for the entire steel pipe, which is smaller than that of the prior-art example. In this way, providing the end face shape A or the end face shape B makes it possible to reduce the bead width of the outer bead.

The larger the pressing amount, the smaller the weld zone width becomes. Accordingly, the ratio of the weld zone width to the sheet thickness indicated in Table 2 refers to a range in which the minimum value may fall. According to Table 2, the minimum value of the ratios of the weld zone width to the sheet thickness of the prior-art example is 76 to 80% for the entire steel pipe. In contrast, in the case of the end face shape A and the end face shape B, the minimum value of the ratio of the weld zone width to the sheet thickness is a value of 48 to 80% for the entire steel pipe, which may be a smaller value than that of the prior-art example.

The heat-affected zone widths were the same as illustrated in Table 1 and Table 2 above, because the variation in the prior-art example, the end face shape A, and the end face shape B was small. Note that the results in Table 1 and Table 2 were of the cases in which the pressing amount was 9 mm and were the results when at least those of the prior-art example were excessively heated to an extent to avoid welding failure rather than a state in which the end portion is sufficiently heated. In an actual operation, even though it is necessary to sufficiently heat the end portion to avoid welding failure, it is presumed that the heat-affected zone width will be the same as or smaller than the results of the verification to avoid being excessively heated. Accordingly, it can be considered that the ratio of the heat-affected zone width to the sheet thickness will be 40% or less for each heat-affected zone (80% or less for the entire steel pipe).

When there is a post-plated portion, it can be considered that the ratio of the post-plated portion to the sheet thickness will be 172% or less for the entire steel pipe. The post-plated portion includes at least an outer bead after welding and may further include a part of the heat-affected zone adjacent to the weld zone including the outer bead. Accordingly, it can be considered that the ratio of the post-plated portion to the sheet thickness will be 172% or less for the entire steel pipe, as it is equal to or larger than the maximum value (92%) of the ratio of the outer bead width after welding to the sheet thickness for the entire steel pipe, and the maximum value (80%) of the ratio of the heat-affected zone width to the sheet thickness is taken into consideration.

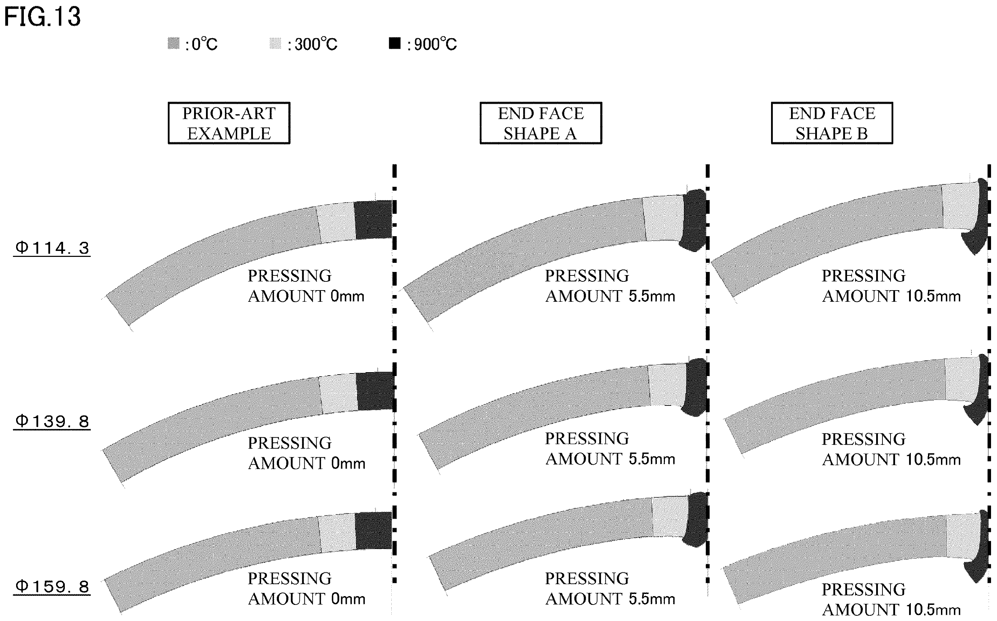

Furthermore, Figure 13 shows states when the removal of the outer bead is unnecessary for steel pipes with three different outer diameters (114.3 mm, 139.8 mm, 159.8 mm) of the prior-art example, the end face shape A, and the end face shape B. Those states refer to a state in which even though the substrate of the weld zone is extruded from the outer surface after welding, the quality of the product is acceptable, and the bead width is minimized. The pressing amount leading to those states was 0 mm in the prior-art example regardless of the outer diameter of the steel pipe, whereas it was 5.5 mm in the end face shape A and 10.5 mm in the end face shape B. That is, the pressing amount of 5.5 mm in the end face shape A and the pressing amount of 10.5 mm in the end face shape B can lead to the minimization of removed width of the outer bead.

While preferable embodiments of the present invention have been described above in detail with reference to attached drawings, the present invention is not limited to those examples. It is obvious that those who have ordinary knowledge in the technical field to which the present invention pertains can conceive of various changes or modifications in the scope of technical ideas described in the claims, and therefore, it is to be appreciated that those changes or modifications are encompassed in the technical scope of the present invention as a matter of course.

### REFERENCE SIGNS LIST

5: plated steel sheet
5i: inner surface
5o: outer surface
5s: outer inclined portion
5t: inner inclined portion
10: high-frequency current
15: coil
20: squeeze roll
30: cutting tool
41, 42: ring-shaped blade portion
41a, 42a: cutting edge
50: electric resistance welded steel pipe
51: first end face
52: second end face
53: outer bead
54: inner bead
61, 62: slit blade
61a, 62a: blade portion
Q1: weld zone
Q2: heat-affected zone

## Claims

1. A production method of an electric resistance welded steel pipe, comprising:
an end face-shaping step of forming, on each of a first end face and a second end face on both sides in a width direction of a plated steel sheet, an outer inclined portion inclined in a sheet-thickness direction from a side of an outer surface toward a side of an inner surface or forming the outer inclined portion and an inner inclined portion inclined in the sheet-thickness direction from the side of the inner surface toward the side of the outer surface, the first end face and the second end face each being shaped in such a way that a sheet thickness decreases from a center in the width direction toward the end face; and
a pipe-making step of welding the first end face and the second end face both undergone shaping end to end to make a pipe.

2. The production method of an electric resistance welded steel pipe according to claim 1, wherein in the end face-shaping step, at least a part of the outer inclined portion is covered with a plated layer that is continuous from the side of the outer surface.

3. The production method of an electric resistance welded steel pipe according to claim 1 or 2, wherein
in the pipe-making step,
the first end face and the second end face are heated to melt and
the first end face and the second end face are subjected to pressing joint such that a ratio of a width of a weld bead on the side of the outer surface to the sheet thickness of the plated steel sheet is 92% or less.

4. The production method of an electric resistance welded steel pipe according to claim 3, wherein in the pipe-making step, a plating material is applied to a weld zone resulting from pressing joint of the first end face and the second end face.

5. The production method of an electric resistance welded steel pipe according to claim 1 or 2, wherein
in the end face-shaping step, the plated steel sheet is coiled after the first end face and the second end face are shaped, and
in the pipe-making step, the plated steel sheet coiled in the end face-shaping step is uncoiled to make a pipe.

6. An electric resistance welded steel pipe, an original of which is a plated steel sheet, comprising:
a weld zone extending in an axial direction, and heat-affected zones extending in the axial direction on both sides in a circumferential direction of the weld zone, wherein
a ratio of an outer-surface circumferential length of the weld zone to a sheet thickness of the plated steel sheet is 48% or more, and
for each of the heat-affected zones, a ratio of an outer-surface circumferential length of the heat-affected zone to the sheet thickness of the plated steel sheet is 40% or less.

7. An electric resistance welded steel pipe, an original of which is a plated steel sheet, comprising,
on an outer surface, a post-plated portion in which a plating material is applied along a weld zone extending at least in an axial direction, wherein
a ratio of an outer-surface circumferential length of the post-plated portion to the sheet thickness of the plated steel sheet is 172% or less.
